# EUROPEAN PATENT APPLICATION

(11) **EP 1 372 093 A1**
(43) Date of publication of application: **17.12.2003**
(21) Application number: 02705350.3
(22) Date of filing: 19.03.2002
(51) Int. Cl.: G06F 17/60

(54) **TRAFFIC SERVICE INFORMATION TRANSMISSION SYSTEM**

(30) Priority: 23.03.2001 JP 2001085232
(71) Applicant: NEC Corporation, Minato-ku, Tokyo 108-8001 (JP)
(72) Inventor: NISHIMORI, H., NEC Communication Systems, Ltd., Minato-ku, Tokyo 108-0073 (JP)
(74) Representative: VOSSIUS & PARTNER
(86) International application number: JP0202611
(87) International publication number: WO02077887

(57) **Abstract**

A traffic service information transmission system comprises an information transmission server (1) for controlling the windows to users and the systems, a traffic service reservation managing system (3) for making a reservation of a traffic service, a user registration information storage device (2) for registering information necessary for each service by using the user ID such as the mobile telephone number as a search key, a traffic service operation managing system (4) for managing the operation and diagram of a traffic service, and a station premise information system (5) for managing premise information on the premises of stations and traffic terminals. When making a reservation of a traffic service, the information necessary for the service is registered by using the user ID as a search key, the user ID is recognized from the service request transmission from a user mobile telephone (8), the user information is extracted from the user registration information storage device (2), and the service request from the user is processed to transmit the necessary information to the user.

## Description

### Background of the Invention

The present invention relates to a traffic service information transmission system by which a user can make a reservation of a traffic service and access the operation of a traffic service across a network such as the Internet.

Conventionally, to make a reservation of a traffic service or acquire reservation information or diagram information of a traffic service across a network such as the Internet, a user accesses a site established by each traffic service.

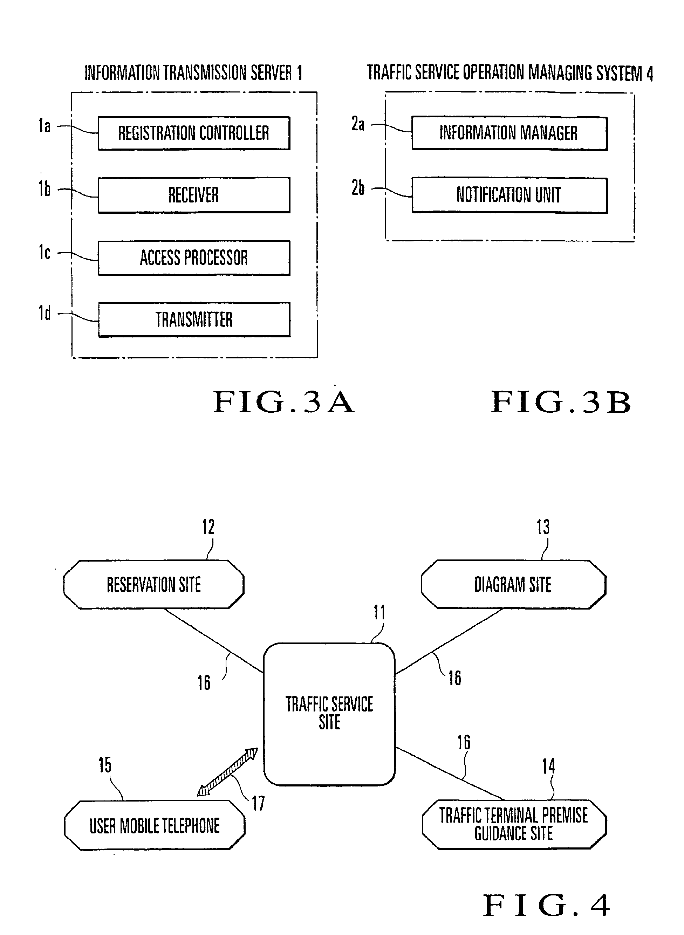

As shown in Fig. 4, a conventional traffic service information system comprises a traffic service site 11, a reservation site 12, diagram site 13, and traffic terminal premise guidance site 14 connected and linked to the traffic service site 11 via a dedicated line or public line 16, and a user mobile telephone 15 capable of accessing these sites across the Internet 17.

A user accesses the traffic service site 11 from the user mobile telephone 15 across the Internet 17. The user then accesses a necessary site and performs settings to the site in order to obtain necessary information. For example, when completing reservation in the reservation site 12, the user accesses the diagram site 13 and inputs information (e.g., the names of traffic terminals of departure and arrival) necessary to acquire information, thereby obtaining information of a route to a main traffic terminal. Then, the user accesses the traffic terminal premise guidance site 14 and inputs information (e.g., the names of transfer traffic terminals), thereby obtaining premise guidance information. If a traffic service after transfer is another company, the user accesses the site of the traffic service after transfer, and repeats a similar procedure.

In the conventional system, however, information acquisition is very cumbersome, so users who can use the system are limited to, e.g., persons accustomed to the operation. Also, there is no means for accessing a user from a site. Therefore, if a traffic service is delayed or interrupted, there is no means for a user to timely acquire the information. In addition, roundabout route search is very time-consuming.

It is an object of the present invention to provide a traffic service information transmission system which anyone can easily access.

It is another object of the present invention to provide a traffic service information transmission system which notifies a user of information of an obstacle such as delay and interruption of a traffic service in real time.

It is still another object of the present invention to provide a traffic service information transmission system by which a roundabout route and its reservation are timely made.

### Summary of the Invention

A traffic service information transmission system according-to the present invention comprises an information transmission server for controlling the windows to users and the systems, a traffic service reservation managing system for making, canceling, and changing a reservation of a traffic service, a user - registration information storage device for registering information necessary for a traffic service reservation service by using the user ID such as the portable telephone number as a search key, a traffic service operation managing system for managing, e.g., the current operation and diagram of a traffic service, and a station premise information system for managing premise information of, e.g., a station and traffic terminal. When making a reservation of a traffic service, the information necessary for the service is registered by using the user ID such as the portable telephone number as a search key, the user ID such as the portable telephone number is recognized from the service request transmission from a user mobile telephone, the user information is extracted from the user registration information storage device by using the recognized number, the service request from the user is processed on the basis of the extracted information, and the necessary information is transmitted to the user.

Also, information of interruption of a route or information of delay of a diagram caused by a construction, disaster, or accident, and a roundabout route, are transmitted from the traffic service operation managing system to the information transmission server. Whether a traffic service corresponding to this detour information can be reserved - is checked by using the traffic service reservation managing system. The detour information is transmitted to the user mobile telephone.

### Brief Description of Drawings

Fig. 1 is a block diagram of a traffic service information transmission system according to an embodiment of the present invention;
Fig. 2 is a view showing an example of the display screen of a user mobile telephone shown in Fig. 1;
Fig. 3A is a functional block diagram of an information transmission server shown in Fig. 1, and Fig. 3B is a functional block diagram of a traffic service operation information managing system shown in Fig. 1; and
Fig. 4 is a block diagram of a conventional traffic service information transmission system.

### Description of the Preferred Embodiments

The present invention will be described in detail below with reference to the accompanying drawings.

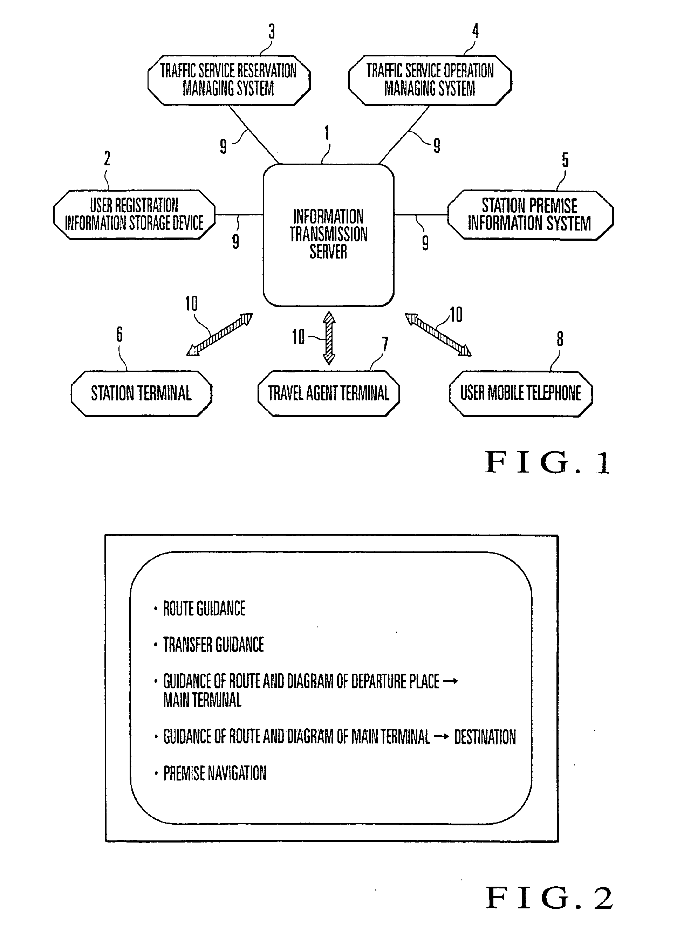

Fig. 1 shows a traffic service information transmission system according to an embodiment of the present invention. As shown in Fig. 1, the traffic service information transmission system of this embodiment comprises an information transmission server 1, a user registration information storage device 2, traffic service reservation managing system 3, traffic service operation managing system 4, and station premise information system 5 connected and linked across a network to the information transmission server 1 via a dedicated line or public line 9, a station terminal 6, travel agent terminal 7, and user mobile telephone 8 capable of accessing the information transmission server 1 across a network 10, and the network 10.

The user mobile telephone 8 has a function of connecting to a network such as the Internet by using a Web browser, and a function of selecting a menu by using a liquid crystal screen. A mobile communication system (not shown) including the user mobile telephone 8 has a function of confirming the position of the user mobile telephone 8 or the position of a base station in which the position of the user mobile telephone 8 is registered, e.g., a position confirmation function implemented by a PHS (Personal Handyphone System).

The station terminal 6 and travel agent terminal 7 are information processing apparatuses such as personal computers having a Web browser and capable of connecting to a network such as the Internet.

As shown in Fig. 3A, the information transmission server 1 includes a registration controller 1a which registers, in the user registration information storage device 2, traffic service reservation -information upon reservation and user information necessary for services such as a departure place and destination, by using the user ID such as the user mobile telephone number as a search key. The information transmission server 1 also includes a receiver 1b for receiving various service requests from users, an access processor 1c which recognizes the number of the user mobile telephone 8 when a service request is received, searches the user registration information storage device 2 for user information in accordance with the user ID by using the recognized telephone number, and accesses a related system in accordance with the requested service, and a transmitter 1d which edits information obtained by the access and transmits the edited information to the user mobile telephone 8. This information transmission to the user mobile telephone 8 is performed by sending electronic mail, or making a phone call to the telephone number of the user mobile telephone 8 and transmitting the information by a synthetic voice.

The traffic service reservation managing system 3 has known functions of making, canceling, and changing a reservation of a traffic service, and charging the fee to the account of the user mobile telephone 8.

As shown in Fig. 3B, the traffic service operation managing system 4 includes an information manager 4a for managing traffic service operation information, traffic service diagram information, and the like, and transmitting accessed information, and a notification unit 4b for notifying the information transmission server 1 of a traffic route along which the operation of a traffic service is disturbed (interruption or large delay by a construction, disaster, or accident) and a roundabout route of this traffic route.

The station premise information system 5 has known functions of managing premise information of stations and traffic terminals, and transmitting accessed information.

Various service operations of the traffic service information transmission system having the above arrangement will be described below. In the following explanation, the network 10 is the Internet 10.

First, a reservation service will be explained. A user accesses the information transmission server 1 across the Internet 10 from the station terminal 6 or travel agent terminal 7 (to be referred to as a reservation access terminal hereinafter), and makes a reservation of a traffic service. To make a reservation, the user inputs the nearest station (or traffic terminal) of a departure place, the nearest station (or traffic terminal) of a destination, and the user ID such as the mobile telephone number. These - pieces of information are received by the receiver 1b of the information transmission server 1, and the access processor 1c accesses the traffic service reservation managing system 3 and makes a reservation. If the reservation is impossible because, e.g., there is no vacancy, the transmitter 1d transmits reservation reject information to the reservation access terminals 6 and 7. If the reservation is made, the registration controller 1a registers the input information from the reservation access terminals 6 and 7 and the reservation information in the user registration information storage device 2 by using the user ID such as the mobile telephone number as a search key.

The operation of a route guidance service will be described next. Fig. 2 shows a display screen when the user mobile telephone 8 accesses the information transmission server 1 across the network 10.

The user mobile telephone 8 transmits route guidance selected from the display screen by the user to the information transmission server 1. When the receiver 1b receives this information, the information transmission server 1 recognizes the user ID such as the mobile telephone number, and the access processor 1c searches the user registration information storage device 2 for user information by using the recognized user ID, and acquires the user information. On the basis of the acquired user information, the access processor 1c transmits necessary information to the traffic service operation managing system 4.

In response to this information, the access processor 1c acquires, from the traffic service operation managing system 4, information of the route and the diagram of a usable traffic service from the nearest station (or the nearest traffic terminal) of a departure place to a main station (or a main traffic terminal) for which a traffic service is reserved, and information of the route and diagram of a usable traffic service from the nearest station (or the nearest traffic terminal) of a destination to a main station (or a main traffic terminal) for which a traffic service is reserved. On the basis of the acquired information, the information transmission server 1 forms route information, necessary transfer time information, and the like, and transmits these pieces of information from the transmitter 1d to the user mobile telephone 8 by e-mail or voice.

A transfer guidance service will be described below. First, similar to the route guidance service described above, the user mobile telephone 8 transmits, to the information transmission server 1, transfer guidance selected from the display screen shown in Fig. 2 by the user. The information transmission server 1 which has received this information via the receiver 1b recognizes the user ID such as the mobile telephone number. The access processor 1c searches the user registration information storage device 2 for user information by using the recognized user ID, and acquires the user information. The access processor 1c transmits the acquired user information, time, and position information of the user mobile telephone 8 to the traffic service operation managing system 4. The information transmission server 1 searches for the next transfer station (or traffic terminal) to obtain necessary information, and transmits transfer information such as necessary transfer time to the user mobile telephone 8 by e-mail or voice via the transmitter 1d.

Guidance of a route and diagram from a departure place to a main terminal will be explained below. First, the user mobile telephone 8 transmits guidance of a route and diagram from a departure place to a main terminal, selected from the display screen shown in Fig. 2 by the user, to the information transmission server 1. The information transmission server 1 which has received this information via the receiver 1b recognizes the user ID such as the mobile telephone number. The access processor 1c searches the user registration information storage device 2 for user information by using the recognized user ID, and acquires the user information. The access processor 1c transmits the acquired user information to the traffic -service operation managing system 4, and acquires information of the route and usable diagram from the nearest station (or the nearest traffic terminal) of a departure place to a main station (or a main traffic terminal) for which a traffic service is reserved. The transmitter 1d transmits these pieces of information to the user mobile telephone 8 by e-mail or voice.

Guidance of a route and diagram from a main terminal to a destination will be explained below. First, the user mobile telephone 8 transmits guidance of a route and diagram from a main terminal to a destination, selected from the display screen shown in Fig. 2 by the user, to the information transmission server 1. The information transmission server 1 which has received this information via the receiver 1b recognizes the user ID such as the mobile telephone number. The access processor 1c searches the user registration information storage device 2 for user information by using the recognized user ID, and acquires the user information. The access processor 1c transmits the acquired user information to the traffic service operation managing system 4, and acquires information of the route and usable diagram from a main station (or a main traffic terminal) for which a traffic service is reserved to the nearest station (or the nearest traffic terminal) of a destination. The transmitter 1d transmits these pieces of information to -the user mobile telephone 8 by e-mail or voice.

A premise navigation service will be described below. The user mobile telephone 8 transmits, to the information transmission server 1, premise navigation selected from the display screen shown in Fig. 2 by the user. The information transmission server 1 which has received this information via the receiver 1b recognizes the user ID such as the mobile telephone number. The access processor 1c searches the user registration information storage device 2 for user information by using the recognized user ID, and acquires the user information. The access processor 1c transmits the acquired user information, time, and position information of the user mobile telephone 8 to the station premise information system 5, and acquires premise information of a transfer station (or traffic terminal) where the user is present. The transmitter 1d transmits the obtained information to the user mobile telephone 8 by e-mail or voice.

An emergency route changing function service will be explained below. The traffic service operation managing system 4 timely transmits, to the information transmission server 1, information of a route where interruption or large delay of a traffic service occurs due to, e.g., a construction, accident, or disaster. This notification is performed whenever such interruption or large delay occurs, or periodically. The access processor 1c of the information transmission server 1 which has received this information searches the user registration information storage device 2 for a user who has reserved this route, and obtains user information of the user. The access processor 1c transmits the obtained user information to the traffic service operation managing system 4, and acquires roundabout route information.

The access processor 1c checks the reservation status of the obtained roundabout route by the traffic service reservation managing system 3. The transmitter 1d transmits these pieces of information to the user mobile telephone 8 by e-mail or voice, and waits for a response from the user. When a comprehension signal is obtained from the user via the information transmission server 1, the traffic service reservation managing system 3 is notified of this information and immediately changes the route. When the whole processing is complete, the information transmission server 1 transmits the result to the user mobile telephone 8 via the transmitter 1d by e-mail or voice.

As has been explained above, the present invention has the following effects. The first effect is that the operation for acquiring information is simple, and information of a traffic service is obtained at once. Therefore, users are not limited, and even children and elderly people can use the system. As a consequence, troubles resulting from movement using traffic services can be reduced.

The second effect is that information of interruption or large delay of a traffic service by, e.g., a construction, accident, or disaster is timely provided, so the possibility of a user being involved in such a trouble decreases. Also, since a traffic service user can change the route, a traffic volume can be controlled, so traffic congestion can be relieved.

## Claims

1. A traffic service information transmission system **characterized by** comprising:
an information transmission server connected to a network;
a reservation terminal and user mobile telephone which access said information transmission server via said network;
a traffic service reservation managing system linked to said information transmission server to make, collate, and cancel a reservation from said information - transmission server;
a traffic service operation managing system linked to said information transmission server to transmit, to said information transmission server, an operation of a traffic service accessed from said information transmission server, and notify said information transmission server of traffic obstacle information;
a station premise information system linked to said information transmission server to transmit, to said information transmission server, premise information of, e.g., a station/traffic terminal accessed from said information transmission server; and
a user registration information storage device connected to said information transmission server to store, from said information transmission server, a traffic service reserved by a user and user information by using a user ID as a search key,
wherein said reservation terminal transmits reservation information input by a user to said information transmission server,
said user mobile telephone transmits each service request to said information transmission server, and receives information responding to the service request, and
said information transmission server comprises receiving means for receiving each service request from - said user mobile telephone, access processing means which, when a service request is received, accesses at least one of said user registration information storage device, traffic service reservation managing system, traffic service operation managing system, and station premise information system, and transmitting means for transmitting necessary information obtained by the access to said user mobile telephone.

2. A traffic service information transmission system according to claim 1, **characterized in that** said information transmission server comprises registration control means for registering, in said user registration information storage device, traffic service reservation related information transmitted from one of said reservation terminal and user mobile telephone and a departure place and destination of a user by using a user ID as a search key.

3. A traffic service transmission system according to claim 1, **characterized in that**
when receiving a traffic service guidance request from said user mobile telephone, said access processing means extracts user information from said user registration information storage device in accordance with a received user ID, and acquires necessary information from said traffic service operation managing system on the basis of the extracted user information, and
said transmitting means transmits, to said user mobile telephone, a traffic route from a departure place to a main station/main traffic terminal and a destination, diagram information of a traffic service, reserved traffic service transfer information, and a transfer time in a transfer station/transfer traffic terminal.

4. A traffic service information transmission system according to claim 1, **characterized in that**
when receiving a station/traffic terminal premise navigation request from said user mobile telephone, said access processing means extracts user information from said user registration information storage device in accordance with a received user ID, and acquires necessary information from said station premise information system on the basis of the extracted user information, and
said transmitting means transmits, to said user mobile telephone, station/traffic terminal premise information as information of guidance to a transfer traffic service.

5. A traffic service information transmission system according to claim 1, **characterized in that**
when receiving information of a traffic route having a traffic obstacle and route information for detouring a damaged route, both of which are transmitted from said traffic service operation managing system, said access processing means searches said user registration information storage device for a user matching the traffic obstacle route information, and
said transmitting means transmits received roundabout route information to said user mobile telephone found by search.

6. A traffic service information transmission system according to claim 5, **characterized in that**
when said access processing means receives a user's comprehension signal from said user mobile telephone, said information transmission server changes a reservation in said traffic service reservation managing system, and
said transmitting means transmits reservation change information to said user mobile telephone.

7. A traffic service information transmission system according to claim 1, **characterized in that** said network is the Internet.
